# EUROPÄISCHE PATENTANMELDUNG

(11) **EP 1 384 919 A2**
(43) Veröffentlichungstag der Anmeldung: **28.01.2004**
(21) Anmeldenummer: 03015836.4
(22) Anmeldetag: 11.07.2003
(51) Int. Cl.: F16G 15/00

(54) **Gliederkette mit codierten Kettengliedern**

(30) Priorität: 23.07.2002 DE 20211100 U
(71) Anmelder: J.D. Theile GmbH & Co. KG, D-58239 Schwerte (DE)
(72) Erfinder: Benecke, Rainer, Dr., 58313 Herdecke (DE)
(74) Vertreter: Schröter & Haverkamp

(57) **Zusammenfassung**

Eine Gliederkette mit codierten Kettengliedern 1 zum orientierten Einlegen eines solchen Kettengliedes 1 in eine Kettengliedaufnahme, bei welchen Kettengliedern 1 die beiden Hälften 2, 3 jeweils eine unterschiedliche innere Breite bᵢ₁ bzw. bᵢ₂ aufweisen und deren Codierung dadurch gebildet ist, dass die maximale äußere Breite bₐ₁ der Kettenglieder 1 im Bereich ihrer in Lastrichtung weisenden Hälfte 2 kleiner ist als im Bereich der anderen Hälfte 3, ist dadurch bestimmt, dass die kleinste innere Breite bᵢ₁ der Kettenglieder 1 mindestens dem größten Materialdurchmesser eines in dieses Kettenglied 1 eingehängten Kettengliedes 1 entspricht und die die beiden Längsstege L₁, L₂ verbindenden Enden E₁, E₂ der Kettenglieder 1, entlang ihrer in die Kettengliedöffnung weisenden Oberfläche kontinuierlich gekrümmt sind.

## Beschreibung

Die Erfindung betrifft eine Gliederkette mit codierten Kettengliedern zum orientierten Einlegen eines solchen Kettengliedes in eine Kettengliedaufnahme, bei welchen Kettengliedern die beiden Hälften jeweils eine unterschiedliche innere Breite aufweisen und deren Codierung dadurch gebildet ist, dass die maximale äußere Breite der Kettenglieder im Bereich ihrer in Lastrichtung weisenden Hälfte kleiner ist als im Bereich der anderen Hälfte.

Gliederketten mit derartig kodierten Kettengliedern werden beispielsweise zum Verzurren von Lasten eingesetzt. Für diesen Zweck wird das freie Ende der Gliederkette an der fest zu zurrenden Last befestigt und ein Kettenglied zum Spannen der Kette in eine Spannvorrichtung eingelegt. Mit der Spannvorrichtung wird dann die Kette unter Zugspannung zum Verzurren der Last gespannt. Damit die Gliederkette bestimmungsgemäß belastbar ist, ist es wesentlich, dass das in die Kettengliedaufnahme der Spannvorrichtung eingelegte Kettenglied mit seiner zur Last weisenden Hälfte in die Kettengliedaufnahme eingreift. Liegt die Last an der anderen Hälfte dieses Kettengliedes an, ist die Gliederkette nicht mit ihrer Nennlast belastbar. Aus diesem Grunde sind Gliederketten entwickelt worden, deren Kettenglieder eine Einlegecodierung tragen, so dass ein orientiertes Einlegen eines solchen Kettengliedes in der bestimmungsgemäßen, zur Last weisenden Richtung in die Kettengliedaufnahme möglich ist. Eine solche Gliederkette ist aus GB 2 151 328 A bekannt. Die Codierung der in diesem Dokument beschrieben Gliederkette wird dadurch bereitgestellt, dass sich die beiden Hälften eines codierten Kettengliedes durch ihre maximale äußere Breite unterscheiden. Die maximale Breite der einen Hälfte des Kettengliedes ist größer als diejenige der anderen Hälfte. Erreicht wird eine solche Codierung beispielsweise im Wege einer Prägung zum Ausbilden von von den beiden Längsstegen nach außen abragenden Nocken oder durch Ausbilden jeweils eines umlaufenden Wulstes an jedem Längssteg. Während bei der ersten Ausgestaltung die innere Breite eines solchen codierten Kettengliedes von der Prägung zur Ausbildung der genannten Codierung unbeeinflusst ist, bildet der Ringwulst in der Kettengliedöffnung eine Einschnürung aus. Beschrieben ist in diesem Dokument ferner eine codierte Gliederkette, deren Kettenglieder anstelle einer Durchmesservergrößerung der Längsstege zur Codierung die notwendige Asymmetrie durch eine dreieckige Form gebildet ist. Die Kettengliedöffnungen der Kettenglieder dieser Gliederkette zeichnen sich somit dadurch aus, dass in derjenigen Hälfte der Codierung mit der größten äußeren Breite des Kettengliedes ebenfalls die innere Breite größer ist als in der anderen Hälfte des Kettengliedes. Infolge der dreieckförmigen Ausbildung der Kettenglieder ist das Ende in derjenigen Hälfte mit der größten inneren Breite durch einen geraden Steg gebildet.

Durch diese beschriebenen Codierungen ist die maximale Breite eines solchen codierten Kettengliedes im Bereich seiner nicht zur Last weisenden Hälfte größer als in der anderen Hälfte. Die Kettengliedaufnahme ist dergestalt konzipiert, dass ein Kettenglied nur mit seiner schmaleren Hälfte eingesetzt werden kann. Ein falsches Einsetzen ist auf diese Weise wirksam verhindert.

Kettenglieder mit der vorbeschriebenen Prägung zum Vergrößern der äußeren Breite als Codierung werden seit vielen Jahren hergestellt und unverändert zum Einsatz gebracht. Auch wenn mit diesen Gliederketten wirksam einer falschen Handhabung einer solchen Gliederkette beim Einlegen eines Kettengliedes in eine Kettengliedaufnahme zum Verzurren von Lasten entgegengewirkt ist, so werden dennoch Nachteile in Kauf genommen. Diese Nachteile betreffen die Handhabung der vorbekannten Gliederketten, da die Kettenglieder miteinander verklanken. Bevor bei einer solchen Gliederkette Last auf die Kette gelegt wird, ist daher sicherzustellen, dass die einzelnen Kettenglieder nicht gegeneinander verklankt sind. Dadurch ist die Handhabung einer solchen Gliederkette aufwendig. Auch die anderen in GB 2 151 328 A beschriebenen Gliederketten neigen zu Verklankungen. Bei der in diesem Dokument beschriebenen Gliederkette gebildet aus den dreieckförmigen Kettengliedern stellt sich zudem als nachteilig dar, dass die beiden Längsstege bei einer Belastung der Gliederkette in Abhängigkeit von der Position des am Quersteg eingehängten Kettengliedes ungleichmäßig belastet werden.

Ausgehend von diesem diskutierten Stand der Technik liegt der Erfindung daher die Aufgabe zugrunde, eine eingangs genannte, gattungsgemäße Gliederkette dergestalt weiterzubilden, dass nicht nur ein Verklanken verhindert, sondern auch eine gleichmäßige Belastung der codierten Kettenglieder bei Anliegen einer Last gewährleistet ist.

Diese Aufgabe wird erfindungsgemäß durch eine eingangs genannte Gliederkette gelöst, bei der die kleinste innere Breite der Kettenglieder mindestens dem größten Materialdurchmesser eines in dieses Kettenglied eingehängten Kettengliedes entspricht und die die beiden Längsstege verbindenden Enden der Kettenglieder entlang ihrer in die Kettengliedöffnung weisenden Oberfläche kontinuierlich gekrümmt sind.

Bei dieser Gliederkette ist ein Verklanken wirksam dadurch verhindert, dass gewährleistet ist, dass unabhängig von der Stellung der einzelnen Kettenglieder zueinander sich diese bei einer Beanspruchung der Gliederkette bestimmungsgemäß zueinander bezüglich ihrer Lage einrichten, ohne dass durch eine solche bestimmungsgemäße Kettengliedeinrichtung durch die Codierung behindert wäre. Zweckmäßigerweise ist die Querschnittsform des das Kettenglied ausbildenden Materials über seine gesamte Erstreckung hin gleich. Bevorzugt ist eine runde, insbesondere kreisrunde Querschnittsform. Ohne Nachteile hinnehmen zu müssen, können auch andere Querschnittsformen eingesetzt werden.

Dadurch, dass bei den codierten Kettengliedern dieser Gliederkette zumindest die in die Kettengliedöffnung weisenden Oberflächen der die Längsstege verbindenden Enden kontinuierlich gekrümmt sind, ist für die beiden in ein solches Kettenglied eingehängten Kettenglieder bei einer Lastbeanspruchung eine eindeutige Lastposition definiert. Diese Position ist durch den Scheitel der beschriebenen Krümmungen im Bereich der Enden des Kettengliedes gebildet. Diese Scheitel liegen auf der Mittellängsachse des Kettengliedes. Es ist zweckmäßig, die beiden Längsstege verbindenden Enden eines codierten Kettengliedes insgesamt gekrümmt auszugestalten, wobei zweckmäßigerweise bei gleichbleibendem Durchmesser sowohl die in die Kettenöffnung weisende Oberfläche als auch die nach außen weisende Oberfläche der Enden gekrümmt sind.

Die innere Breite der codierten Kettenglieder ist zweckmäßigerweise kleiner als der doppelte Durchmesser des zur Ausbildung des Kettengliedes eingesetzten Materiales, beispielsweise Drahtes.

Neben einer gleichbleibenden Querschnittsform wird man bevorzugt Kettenglieder einsetzen, die über die Erstreckung des Kettengliedes hinweg jeweils eine gleiche Materialstärke aufweisen. Bei einer solchen Ausgestaltung kann ein Kettenglied in einer Draufsicht etwa tropfenförmig ausgebildet sein. Um jedoch in der zur Last weisenden Hälfte des Kettengliedes abschnittsweise parallel zueinander verlaufende Längsstege zur Verfügung zu haben, mit denen dieses Kettenglied in eine Kettengliedaufnahme einlegbar ist, ist in einer Ausgestaltung vorgesehen, die codierten Kettenglieder in einer Draufsicht schlüssellochförmig auszubilden. Eine solche schlüssellochförmige Ausgestaltung kann grundsätzlich mit parallelen Längsstegabschnitten im Bereich der Hälfte mit der kleineren inneren Breite oder auch mit winklig zueinander verlaufenden Längsstegabschnitten in diesem Bereich vorgesehen sein. Von besonderem Vorteil bei derartigen schlüssellochförmig ausgebildeten codierten Kettengliedern ist die sich daraus ergebende Nachgiebigkeit, insbesondere bei einer Schockbelastung der Gliederkette. Durch die schlüssellochförmige Ausbildung dieser Kettenglieder, wobei diese Form durch einen S-förmig geschwungenen Abschnitt des Längssteges zweckmäßigerweise gebildet wird, ist eine Elastizitätsreserve bereitgestellt. Bei einer Überbeanspruchung, beispielsweise bei einer Schockbeanspruchung der Gliederkette werden diese Längsstege geringfügig innerhalb der Elastizitätsgrenzen des eingesetzten Materials gelängt. Eine derartige Elastizität ist bei Kettengliedern mit gerade verlaufenden Längsstegen nicht erreichbar.

Die beschriebene Gliederkette eignet sich nicht nur für einen Einsatz zum Verzurren von Lasten sondern grundsätzlich im Zusammenhang mit dem Umgang von sämtlichen Kettenzubehörteilen, bei denen das Einlegen eines Kettengliedes gefordert ist, beispielsweise Verkürzungshaken, Verkürzungslaschen oder dergleichen.

Nachfolgend ist die Erfindung anhand eines Ausführungsbeispiels unter Bezugnahme auf die beigefügten Figuren beschrieben. Es zeigen:
- **Fig. 1:**: eine Draufsicht auf ein bezüglich seiner Einsetzrichtung in eine Kettengliedaufnahme codiertes Kettenglied gemäß einer ersten Ausgestaltung,
- **Fig. 2:**: eine Draufsicht auf ein bezüglich seiner Einsetzrichtung in eine Kettengliedaufnahme codiertes Kettenglied gemäß gemäß einer weiteren Ausgestaltung,
- **Fig. 3:**: eine Darstellung eines Gliederkettenteils gebildet aus Kettengliedern entsprechend denjenigen zu Figur 1 gezeigten benachbart zu einer Verkürzungsklaue mit einer Kettengliedaufnahme und
- **Fig. 4:**: die Verkürzungsklaue der Figur 3 mit einem in die Kettengliedaufnahme eingelegten Kettenglied.

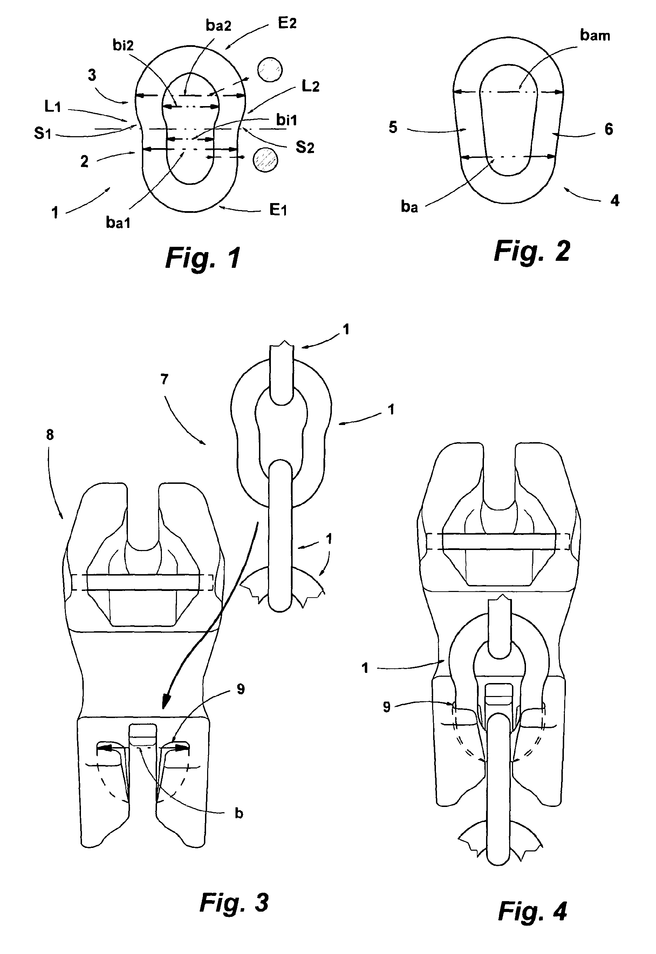

Ein Kettenglied 1 einer Gliederkette ist bezüglich seiner Orientierung zum Einsetzen in eine Kettengliedaufnahme, beispielsweise einer Verkürzungsklaue codiert. Diese Einlegecodierung ist bei dem dargestellten Kettenglied 1 dadurch gebildet, dass die in Figur 1 untere und zur Last bzw. zum Lasthaken weisende Hälfte 2 eine geringere äußere Breite bₐ₁ als die maximale äußere Bereite bₐ₂ im Bereich der oberen Hälfte 3 aufweist. Die innere Breite bᵢ₁ des Kettengliedes 1 ist in der unteren Hälfte 2 schmaler ausgebildet als die innere Breite bᵢ₂ in der oberen Hälfte 3. Die kleinste innere Breite des Kettengliedes 1 - die innere Breite bᵢ₁ - ist in jedem Fall mindestens so groß wie die längste, die Querschnittsfläche des Kettengliedes 1 bzw. des das Kettenglied 1 ausbildenden Materiales querende Achse. Mit anderen Worten: Die kleinste innere Breite bᵢ₁ des Kettenglieds 1 entspricht mindestens dem größten Materialdurchmesser eines in dieses Kettenglied 1 eingehängten weiteren Kettengliedes 1. Bei dem in Figur 1 dargestellten Ausführungsbeispiel weist das Kettenglied 1 eine kreisrunde Querschnittsform, wie dies durch die beiden Querschnitte in Figur 1 dargestellt ist. Dargestellt ist jeweils eine Querschnittsfläche des Kettengliedes 1 bzw. des das Kettenglied ausbildenden Materials, welches in dem dargestellten Ausführungsbeispiel ein Draht ist, im Bereich der unteren und im Bereich der oberen Hälfte 2 bzw. 3. Die Querschnittsfläche ist ebenfalls über das gesamte Kettenglied 1 gleichbleibend groß bemessen. Somit ist die längste die Querschnittsfläche des Kettengliedes 1 querende Achse jede beliebige, die den Mittelpunkt der Querschnittsfläche Achse tangiert bzw. quert. Die innere Breite bᵢ₁ ist zweckmäßigerweise jedoch nicht größer als der doppelte Durchmesser des zur Ausbildung des Kettengliedes 1 eingesetzten Drahtes.

In einer Draufsicht auf die Ebene des Kettengliedes 1 zeigt dieses eine schlüssellochartige Form. Die Längsstege L₁, L₂ des Kettengliedes 1 weisen zur Erzielung der schlüssellochartigen Form einen S-förmig geschwungenen Abschnitt S₁, S₂ auf. In diesem Abschnitt S₁, S₂ erfolgt ein Übergang von der inneren Breite bᵢ₁ der unteren Hälfte 2 auf die größere innere Breite bᵢ₂ des Kettengliedes 1 im Bereich seiner oberen Hälfte 3.

Die die beiden Längsstege L₁, L₂ verbindenden Enden E₁, E₂ des Kettengliedes 1 sind kontinuierlich gekrümmt, wobei insbesondere die zur Kettengliedöffnung weisenden Oberflächen der Enden E₁, E₂ eine solche Krümmung aufweisen. Die Scheitelpunkte der gekrümmten Enden E₁, E₂ liegen auf der Mittellängsachse des Kettengliedes 1.

Durch die Ausbildung der Längsstege L₁, L₂ in der vorbeschriebenen Art und Weise bieten diese eine Elastizitätsreserve, so dass diese Kettenglieder gegenüber solchen mit geraden Längsstegen nachgiebiger sind. Dieses ist insbesondere im Hinblick auf eine mögliche Schockbeanspruchung einer aus solchen Kettengliedern 1 gebildeten Gliederkette günstig.

In der unteren Hälfte 2 des Kettengliedes 1 sind die Längsstege zumindest abschnittsweise parallel zueinander verlaufend vorgesehen. Dieser Abschnitt des Kettengliedes 1 dient zum Einsetzen in eine Kettenaufnahme.

Eine Gliederkette, die aus Kettenglieder 1 besteht, birgt nicht die Gefahr in sich, dass die einzelnen Kettenglieder 1 miteinander verklanken. Vielmehr ist durch die Bemessung der inneren Breite b; sichergestellt, dass jedes in das Kettenglied 1 eingehängte weitere Kettenglied 1 sich beim Anheben der Gliederkette oder bei Anliegen einer Last bestimmungsgemäß ausrichten kann.

Figur 2 zeigt in einer Draufsicht ein weiteres bezüglich seiner Einlegeorientierung codiertes Kettenglied 4 zur Ausbildung einer Gliederkette. Das Kettenglied 4 weist dieselben Eigenschaften wie das Kettenglied 1 der Figur 1. Im Unterschied zur Ausbildung des Kettengliedes 1 sind bei dem Kettenglied 4 von der oberen maximalen, einer Codierung dienenden äußeren Breiten bₐₘ ausgehend die beiden Längsstege 5, 6 zueinander geneigt, so dass die äußere Breite bₐ im Bereich der unteren Hälfte kleiner ist als die äußere Breite bₐₘ.

Auch bei diesem Kettenglied 4 sind die beiden die Längsstege 5, 6 verbindenden Enden insbesondere mit ihrer in die Kettengliedöffnung weisenden Oberfläche kontinuierlich gekrümmt, um für beide in das Kettenglied 1 eingehängten Kettenglieder unter Last eine definierte Position bereitzustellen.

Figur 3 zeigt einen Ausschnitt einer Gliederkette 7, die aus mehreren Kettengliedern 1 aufgebaut ist. Die Gliederkette 7 bzw. ein Kettenglied 1 der Gliederkette 7 soll in eine Verkürzungsklaue 8 eingelegt werden. Zu diesem Zweck verfügt die in Figur 3 gezeigte Verkürzungsklaue 8 im unteren Bereich über eine taschenartig ausgebildete Kettengliedaufnahme 9. Die lichte Weite b der Kettengliedaufnahme 9 entspricht im wesentlichen der äußeren Breite bₐ₁ des Kettengliedes 1 im Bereich seiner unteren Hälfte 2. Zwischen den beiden Bemaßungen - b und bₐ₁ - ist lediglich soviel Spiel vorgesehen, dass das Kettenglied 1 mit seiner unteren Hälfte 2 ohne weiteres in die Kettengliedaufnahme 9 der Verkürzungsklaue 8 eingelegt werden kann.

Das in die Kettengliedaufnahme 9 eingelegte Kettenglied 1 ist in Figur 4 dargestellt. Aus dieser Darstellung wird deutlich, dass ein Einlegen des Kettengliedes 1 mit seiner in den Figuren gezeigten oberen Hälfte 3 in die Kettengliedaufnahme 9 aufgrund der größeren äußeren Breite bₐ₂ nicht möglich wäre. Schließlich ist die lichte Weite b der Kettengliedaufnahme 9 kleiner als die äußere Breite bₐ₂ des Kettengliedes 1. Aus diesem Grunde kann ein Kettenglied 1 in die Kettengliedaufnahme 9 der Verkürzungsklaue 8 nur in seiner bestimmungsgemäßen Orientierung eingelegt werden. Da die untere Hälfte 2 jedes Kettengliedes 1 jeweils zur Last bzw. zu einem Lasthaken weist, besteht bei der Gliederkette 7 niemals die Gefahr, dass ein Kettenglied 1 falsch orientiert in die Kettengliedaufnahme 9 der Verkürzungsklaue 8 eingelegt werden könnte.

### Bezugszeichenliste

- 1: Kettenglied
- 2: zur Last weisende Hälfte
- 3: von der Last wegweisende Hälfte
- 4: Kettenglied
- 5: Längssteg
- 6: Längssteg
- 7: Gliederkette
- 8: Verkürzungsklaue
- 9: Kettengliedaufnahme

- b: lichte Weite
- bₐ: äußere Breite
- bₐ₁: äußere Breite
- bₐ₂: äußere Breite
- bᵢ: innere Breite

- L₁: Längssteg
- L₂: Längssteg
- S₁: Abschnitt
- S₂: Abschnitt
- E₁: Ende
- E₂: Ende

## Patentansprüche

1. Gliederkette mit codierten Kettengliedern (1, 4) zum orientierten Einlegen eines solchen Kettengliedes (1, 4) in eine Kettengliedaufnahme (9), bei welchen Kettengliedern (1, 4) die beiden Hälften jeweils eine unterschiedliche innere Breite (bᵢ₁, bᵢ₂) aufweisen und deren Codierung dadurch gebildet ist, dass die maximale äußere Breite (bₐ₁, bₐ) der Kettenglieder (1, 4) im Bereich ihrer in Lastrichtung weisenden Hälfte (2) kleiner ist als im Bereich der anderen Hälfte (3), **dadurch gekennzeichnet, dass**
- die kleinste innere Breite (bᵢ₁) der Kettenglieder (1, 4) mindestens dem größten Materialdurchmesser eines in dieses Kettenglied (1, 4) eingehängten Kettengliedes (1, 4) entspricht und
- die die beiden Längsstege (5, 6; L₁, L₂) verbindenden Enden (E₁, E₂) der Kettenglieder (1, 4) entlang ihrer in die Kettengliedöffnung weisenden Oberfläche kontinuierlich gekrümmt sind.

2. Gliederkette nach Anspruch 1, **dadurch gekennzeichnet, dass** die die beiden Längsstege (5, 6; L₁, L₂) verbindenden Enden (E₁, E₂) der Kettenglieder (1, 4) insgesamt kontinuierlich gekrümmt sind.

3. Gliederkette nach Anspruch 1 oder 2, **dadurch gekennzeichnet, dass** über die gesamte Erstreckung des das Kettenglied (1, 4) ausbildenden Materials dieses dieselbe Querschnittsform aufweist.

4. Gliederkette nach einem der Ansprüche 1 bis 3, **dadurch gekennzeichnet, dass** die Kettenglieder (1) eine schlüssellochartige Form aufweisen.

5. Gliederkette nach Anspruch 4, **dadurch gekennzeichnet, dass** die Längsstege (L₁, L₂) der Kettenglieder (1) zumindest innerhalb eines Abschnittes (S₁, S₂) S-förmig geschwungen sind.

6. Gliederkette nach Anspruch 4 oder 5, **dadurch gekennzeichnet, dass** im Bereich der zur Last weisenden Hälfte (2) der Kettenglieder (1) die beiden Längsstegabschnitte parallel zueinander verlaufend angeordnet sind.

7. Gliederkette nach einem der Ansprüche 1 bis 6, **dadurch gekennzeichnet, dass** die Querschnittsform der Kettenglieder (1, 4) kreisrund ist.

8. Gliederkette nach einem der Ansprüche 1 bis 6, **dadurch gekennzeichnet, dass** alle Kettenglieder (1) der Gliederkette (7) codiert sind.
